# EUROPÄISCHE PATENTSCHRIFT

(11) **EP 1 110 415 B1**
(45) Veröffentlichungstag und Bekanntmachung des Hinweises auf die Patenterteilung: **12.07.2006**
(21) Anmeldenummer: 99946123.9
(22) Anmeldetag: 03.09.1999
(51) Int. Cl.: H04Q 3/00

(54) **VERFAHREN ZUM UMSCHALTEN EINER TEILNEHMERSTELLE VON EINEM ERSTEN FERNMELDENETZ ZU EINEM ZWEITEN FERNMELDENETZ**
METHOD FOR SWITCHING A SUBSCRIBER SET FROM A FIRST TELECOMMUNICATION NETWORK TO A SECOND TELECOMMUNICATION NETWORK
PROCEDE POUR COMMUTER UN POSTE D'ABONNE D'UN PREMIER RESEAU DE TELECOMMUNICATION SUR UN SECOND RESEAU DE TELECOMMUNICATION

(30) Priorität: 05.09.1998 EP 98116939
(43) Veröffentlichungstag der Anmeldung: 27.06.2001
(73) Patentinhaber: SIEMENS AKTIENGESELLSCHAFT, 80333 München (DE)
(72) Erfinder: LÖBIG, Norbert, D-64291 Darmstadt (DE)
(86) Internationale Anmeldenummer: PCT/EP1999/006515
(87) Internationale Veröffentlichungsnummer: WO 2000/014976

(56) Entgegenhaltungen:
- EP-A- 0 708 570
- EP-A- 0 751 691
- WO-A-97/33441
- US-A- 5 625 681
- LIN Y -B: "A CACHE APPROACH FOR SUPPORTING LIFE-TIME UPT NUMBER" WIRELESS NETWORKS, Bd. 2, Nr. 2, 1. Juni 1996 (1996-06-01), Seiten 155-160, XP000620237
- BISHOP T: "FREEING THE NETWORK FOR COMPETITION" TELECOMMUNICATIONS, Bd. 29, Nr. 4, April 1995 (1995-04), Seite 75, 77/78, 80 XP000677133

## Beschreibung

Die Erfindung bezieht sich auf ein Verfahren zum Umschalten einer an einem ersten Fernmeldenetz angeschlossenen Teillnehmerstelle von dem ersten Fernmeldenetz zu einem zweiten Fernmeldenetz, welches mit dem ersten Fernmeldenetz über mindestens eine Verbindungsstelle verbunden ist, wobei in beiden Fernmeldenetzen bezüglich der betreffenden Teilnehmerstelle primäre Wegeleitinformationen (Routing-Informationen) enthalten sind, durch welche der Verbindungsaufbau in dem jeweiligen Fernmeldenetz zu der Ortsvermittlungsstelle hin festgelegt wird, an der die betreffende Teilnehmerstelle in dem ersten Fernmeldenetz angeschlossen ist.

Die Forderung nach einem effizienten Verfahren der vorstehend genannten Art hat in letzter Zeit aufgrund der weltweit zunehmenden Deregulierung auf dem Gebiet der Telekommunikation erheblich an Bedeutung gewonnen. Nach der betreffenden Deregulierung stehen alternative Fernmeldenetzbetreiber in Konkurrenz zu traditionellen Fernmeldenetzbetreibern. Dabei ermöglichen es gesetzliche Vorschriften (z.B. die Netzzugangsverordnung in Deutschland und der Telecommunication Act in U.S.A.), daß der marktbeherrschende traditionelle Fernmeldenetzbetreiber verpflichtet ist, die Nutzung von Leistungen räumlich an der jeweiligen Schnittstelle diskriminierungsfrei und zu den Bedingungen zu ermöglichen, die er sich selbst einräumt.

Aus dem Dokument EP-A2-0708570 ist ein Verfahren bekannt, durch das Rufe zu einem Kunden mithilfe alternativer Netzbetreiber behandelt werden können.

Aufgrund der gesetzlichen Rahmenvorgaben und nach deren Umsetzung steht es einem bisher am Fernmeldenetz des traditionellen Fernmeldenetzbetreibers angeschlossenen Teilnehmer frei, nach einem Wechsel zu einem konkurrierenden Fernmeldenetzbetreiber dessen Dienste, Tarifangebote und sonstigen Serviceleistungen in Anspruch zu nehmen.

Nachdem der alternative Fernmeldenetzbetreiber zur Bedienung einer Teilnehmerstelle bzw. der an seinem Netz angeschlossenen Teilnehmerstellen im allgemeinen einen galvanischen Zugang zu den Teilnehmerleitungen anstrebt, ist ein Umschalten der betreffenden Teilnehmerstellen vom traditionellen Fernmeldenetz, nachstehend als erstes Fernmeldenetz bezeichnet, zu dem alternativen Fernmeldenetz, nachstehend als zweites Fernmeldenetz bezeichnet, erforderlich. Der damit erforderliche Wechsel des Netzes kann in konventioneller Weise dadurch geschehen, daß die Teilnehmerleitung der jeweiligen Teilnehmerstelle von der Ortsvermittlungsstelle oder einer vorgelagerten Netzeinrichtung, wie einem Hauptverteiler oder Kabelverzweiger, des ersten Fernmeldenetzes abgeklemmt und an der entsprechenden Einrichtung des zweiten Fernmeldenetzes angeschlossen wird. Diese im allgemeinen manuell durchzuführenden Maßnahmen genügen jedoch noch nicht, um die betreffende Teilnehmerstelle, die im zweiten Fernmeldenetz ihre alte Rufnummer behalten will bzw. soll, unter der sie im ersten Fernmeldenetz erreichbar war, sowohl vom ersten Fernmeldenetz als auch in dem zweiten Fernmeldenetz zu erreichen. Vielmehr sind noch verschiedene Einträge in den Ortsvermittlungsstellen der beiden Fernmeldenetze bezüglich der betreffenden Teilnehmerstelle vorzunehmen bzw. zu löschen. Außerdem müssen die primären Wegeleitinformationen bezüglich der betreffenden Teilnehmerstelle in den beiden Fernmeldenetzen den veränderten Verhältnissen entsprechend angepaßt werden.

Überdies bringt das vorstehend betrachtete Umschalten einer an einem ersten Fernmeldenetz angeschlossenen Teilnehmerstelle von dem ersten Fernmeldenetz zu dem zweiten Fernmeldenetz ein Problem insofern mit sich, als dieser Umschaltvorgang und die damit zusammenhängenden Maßnahmen, die im ersten Fernmeldenetz und dem zweiten Fernmeldenetz zu treffen sind, in der Regel nicht zeitgleich und nicht von demselben Personal durchgeführt werden. Dies bedeutet aber, daß die betreffende Teilnehmerstelle, die umzuschalten ist, gegebenenfalls über längere Zeit weder in dem ersten Fernmeldenetz noch in dem zweiten Fernmeldenetz erreichbar ist. Wünschenswert wäre in diesem Zusammenhang, die Zeit des Wechsels vom ersten Fernmeldenetz zum zweiten Fernmeldenetz so kurz wie möglich, das heißt auf die Dauer des Umschaltvorgangs zu beschränken.

Der Erfindung liegt demgemäß die Aufgabe zugrunde, das Verfahren der eingangs genannten Art so zu gestalten, daß die eine Teilnehmerstelle, die von dem ersten Fernmeldenetz zu dem zweiten Fernmeldenetz umzuschalten ist, unter Beibehaltung ihrer Rufnummer möglichst weitgehend erreichbar ist.

Gelöst wird die vorstehend aufgezeigte Aufgabe bei einem Verfahren der eingangs genannten Art erfindungsgemäß, zum einen dadurch, daß zunächst in der Ortsvermittlungsstelle des ersten Fernmeldenetzes eine sekundäre Wegeleitinformation gespeichert wird, welche bezüglich der betreffenden Teilnehmerstelle bei deren Nichtvorhandensein einen Verbindungsaufbau über die genannte Verbindungsstelle zu dem zweiten Fernmeldenetz hin festlegt, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird.

Die Erfindung bringt den Vorteil mit sich, daß allein durch administrative Tätigkeit im ersten Fernmeldenetz und durch Anschalten der genannten Teilnehmerstelle an der Ortsvermittlungsstelle des zweiten Fernmeldenetzes die betreffende Teilnehmerstelle, die von dem ersten Fernmeldenetz zu dem zweiten Fernmeldenetz umgeschaltet wird, ihre größtmögliche Erreichbarkeit im Zuge dieses "Umzuges" vom ersten Fernmeldenetz zum zweiten Fernmeldenetz erhält und dabei stets unter ihrer Rufnummer erreichbar ist bzw. bleibt, unter der sie im ersten Fernmeldenetz ursprünglich erreichbar war. Die Nichterreichbarkeit der betreffenden Teilnehmerstelle reduziert sich dabei lediglich auf die kurze Dauer des Umschaltens vom ersten Fernmeldenetz zum zweiten Fernmeldenetz, das heißt, die betreffende Teilnehmerstelle ist praktisch ohne Unterbrechung stets erreichbar und kann selbst stets Verbindungen aufbauen.

Vorzugsweise wird die primäre Wegeleitinformation in dem zweiten Fernmeldenetz bezüglich der betreffenden Teilnehmerstelle derart geändert, daß Verbindungen in dem zweiten Fernmeldenetz zu der betreffenden Teilnehmerstelle hin zur Ortsvermittlungsstelle dieses zweiten Fernmeldenetzes hin aufgebaut werden. Dies bringt den Vorteil mit sich, daß die Teilnehmerstelle nach Umschaltung vermittlungstechnisch erreichbar ist, insbesondere für Verbindungen, die ihren Ursprung im zweiten Fernmeldenetz haben.

Zweckmäßigerweise werden mit der Speicherung der sekundären Wegeleitinformation in der Ortsvermittlungsstelle des ersten Fernmeldenetzes bezüglich der genannten Teilnehmerstelle weitere Angaben festgehalten, die im Zuge von zu der Ortsvermittlungsstelle des ersten Fernmeldenetzes hin gelangenden Verbindungswünschen bezüglich der betreffenden Teilnehmerstelle in der Ortsvermittlungsstelle des ersten Fernmeldenetzes ein Hinweis auf eine im Wechsel befindliche Teilnehmerstelle liefern, und diese weiteren Angaben werden im Zuge eines Verbindungsaufbaus zu der betreffenden Teilnehmerstelle hin derart ausgewertet, daß in dem Fall, daß die betreffende Teilnehmerstelle an der Ortsvermittlungsstelle des ersten Fernmeldenetzes noch angeschlossen ist, der Verbindungsaufbau zu der betreffenden Teilnehmerstelle über diese Ortsvermittlungsstelle erfolgt, während bei nicht mehr an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle voneinander zu unterscheiden, daß die betreffende Teilnehmerstelle noch bzw. nicht mehr an der Ortsvermittlungsstelle des ersten Fernmeldenetzes angeschlossen ist.

Vorteilhafterweise wird zur Aktivierung der sekundären Wegeleitinformation bezüglich der betreffenden Teilnehmerstelle in der Ortsvermittlungsstelle des ersten Fernmeldenetzes ein beim Abschalten der betreffenden Teilnehmerstelle hervorgerufener Fehler auf der Teilnehmerstellenanschlußleitung herangezogen. Dies bringt den Vorteil einer sofortigen Aktualisierung der Wegeleitinformation und der größeren Erreichbarkeit der Teilnehmerstelle mit sich.

Vorzugsweise wird nach dem Abschalten der betreffenden Teilnehmerstelle von der Ortsvermittlungsstelle des ersten Fernmeldenetzes die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil einer Verringerung der Verkehrsbelastung im ersten Fernmeldenetz für Verbindungswünsche zu der genannten Teilnehmerstelle hin mit sich.

Anschließend werden vorzugsweise die sekundären Wegeleitinformationen bezüglich der betreffenden Teilnehmerstelle in der Ortsvermittlungsstelle des ersten Fernmeldenetzes gelöscht. Diese sekundären Wegeleitinformationen werden nämlich in dieser Ortsvermittlungsstelle des ersten Fernmeldenetzes nicht mehr gebraucht.

Überdies können in vorteilhafter Weise in der Ortsvermittlungsstelle des ersten Fernmeldenetzes Angaben bezüglich der betreffenden Teilnehmerstelle, die dort bisher angeschaltet war, gelöscht werden. Auch solche Angaben werden in dieser Ortsvermittlungsstelle nicht mehr gebraucht.

Zweckmäßigerweise wird beim Abschalten der Teilnehmerstelle in dem Fall, daß es sich um eine analoge Teilnehmerstelle handelt, ein Leitungsfehler in der Ortsvermittlungsstelle des ersten Fernmeldenetzes durch Erd- oder Kurzschluß der zugehörigen Teilnehmerleitung hervorgerufen. Dies stellt für analoge Teilnehmerstellen eine einfache und wirksame Maßnahme der Signalisierung des Abschaltzustands dar.

Zur Leitungsfehlererkennung einer digitalen Teilnehmeranschlußleitung wird zweckmäßigerweise ein Trägersignal für die Dauer der Teilnehmerschaltung permanent wirksam gemacht und seitens der Ortsvermittlungsstelle des ersten Fernmeldenetzes überwacht wird. Diese Maßnahme stellt für eine digitale Teilnehmeranschlußleitung ebenfalls eine einfache und wirksame Maßnahme der Signalisierung des Abschaltzustands dar.

Die oben aufgezeigte Aufgabe wird andererseits bei einem Verfahren der eingangs genannten Art erfindungsgemäß dadurch gelöst, daß zunächst in der Vermittlungsstelle des zweiten Fernmeldenetzes eine sekundäre Wegeleitinformation gespeichert wird, welche bezüglich der betreffenden Teilnehmerstelle bei deren Nichtvorhandensein einen Verbindungsaufbau über die genannte Verbindungsstelle zu dem ersten Fernmeldenetz hin festlegt, daß sodann die primäre Wegeleitinformation in dem zweiten Fernmeldenetz bezüglich der betreffenden Teilnehmerstelle derart geändert wird, daß Verbindungen in dem zweiten Fernmeldenetz zu der betreffenden Teilnehmerstelle hin zu der Ortsvermittlungsstelle dieses zweiten Fernmeldenetzes aufgebaut werden, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird. Durch diese Maßnahmen wird erreicht, daß allein durch administrative Tätigkeit im zweiten Fernmeldenetz und durch Anschalten der genannten Teilnehmerstelle an der Ortsvermittlungsstelle des zweiten Fernmeldenetzes die betreffende Teilnehmerstelle, die vom ersten Fernmeldenetz zu dem zweiten Fernmeldenetz umgeschaltet wird bzw. ist, bis zu der genannten Umschaltung von beiden Fernmeldenetzen aus voll und unter ihrer unveränderten Rufnummer erreichbar ist und erst nach der Anschaltung an der Ortsvermittlungsstelle des zweiten Fernmeldenetzes nur noch in diesem zweiten Fernmeldenetz erreichbar ist, bis mindestens eine noch zu erläuternde Zusatzmaßnahme getroffen ist, die dann wieder volle Erreichbarkeit der betreffenden Teilnehmerstelle von beiden Fernmeldenetzen aus garantiert.

Zweckmäßigerweise werden mit der Speicherung der sekundären Wegeleitinformation in der Ortsvermittlungsstelle des zweiten Fernmeldenetzes bezüglich der genannten Teilnehmerstelle weitere Angaben festgehalten, die im Zuge von zu der Ortsvermittlungsstelle des zweiten Fernmeldenetzes hin gelangenden Verbindungswünschen bezüglich der betreffenden Teilnehmerstelle in der Ortsvermittlungsstelle des zweiten Fernmeldenetzes einen Hinweis auf einen Teilnehmer im Wechsel liefern, und diese weiteren Angaben werden im Zuge eines Verbindungsaufbaus zu der betreffenden Teilnehmerstelle hin derart ausgewertet, daß in dem Fall, daß die betreffende Teilnehmerstelle an der zugehörigen Ortsvermittlungsstelle schon angeschlossen ist, der Verbindungsaufbau zu der betreffenden Teilnehmerstelle über diese Ortsvermittlungsstelle erfolgt, während bei noch nicht an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle voneinander zu unterscheiden, daß nämlich die betreffende Teilnehmerstelle noch nicht bzw. schon an der Ortsvermittlungsstelle des zweiten Fernmeldenetzes angeschlossen ist.

Vorzugsweise wird zur Deaktivierung der sekundären Wegeleitinformation bezüglich der betreffenden Teilnehmerstelle in der Ortsvermittlungsstelle des zweiten Fernmeldenetzes ein beim Anschalten der betreffenden Teilnehmerstelle hervorgerufenes Fehlerendesignal auf der zugehörigen Teilnehmerstellenanschlußleitung herangezogen. Dadurch kann das Angeschlossensein der betreffenden Teilnehmerstelle an der Ortsvermittlungsstelle des zweiten Fernmeldenetzes schnell und eindeutig erkannt werden.

Nach dem Abschalten der betreffenden Teilnehmerstelle von der Ortsvermittlungsstelle des ersten Fernmeldenetzes wird zweckmäßigerweise die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil mit sich, daß damit die betreffende Teilnehmerstelle auch vom ersten Fernmeldenetz wieder voll erreichbar ist und auch zu Teilnehmerstellen in diesem ersten Fernmeldenetz Verbindungen aufbauen kann.

Zweckmäßigerweise werden die sekundären Wegeleitinformationen bezüglich der betreffenden Teilnehmerstelle in der Ortsvermittlungsstelle des zweiten Fernmeldenetzes gelöscht. Diese Informationen werden dort nicht mehr benötigt und belasten daher nach ihrem Löschen nicht mehr die betreffende Ortsver

Vorzugsweise wird in der Ortsvermittlungsstelle des zweiten Fernmeldenetzes die dort zusammen mit der sekundären Wegeleitinformation zuvor gespeicherte Angabe, gemäß sich der die betreffende Teilnehmerstelle im Wechsel befindet, in den Anschluß der betreffenden Teilnehmerstelle an dieser Ortsvermittlungsstelle angebende Angaben geändert. Dies bringt den Vorteil einer besonders einfachen Kennzeichnung des Abschlusses der Umschaltphase und des Angeschlossenseins der betreffenden Teilnehmerstelle mit sich.

Zweckmäßigerweise wird beim Anschalten der Teilnehmerstelle in dem Fall, daß es sich um eine analoge Teilnehmerstelle handelt, ein Leitungsfehlerende an der Ortsvermittlungsstelle des zweiten Fernmeldenetzes durch die Aufhebung eines dort bestehenden Erd- oder Kurzschlusses der zugehörigen Teilnehmerleitung erreicht. Dies bringt den Vorteil einer *sofortigen* Signalisierung des Anschaltzustandes der Teilnehmerstelle mit sich.

Zur Leitungsfehlerendeerkennung einer digitalen Teilnehmeranschlußleitung wird vorzugsweise ein an diese für die Dauer der Teilnehmerstellenumschaltung permanent aktiviertes und seitens der Ortsvermittlungssstelle überwachtes Trägersignal verwendet. Dies bringt den Vorteil mit sich, daß die Anschaltung einer digitalen Teilnehmerstelle schnell erkannt werden kann.

Vorstehend sind zwei grundsätzliche Verfahren, ein erstes Verfahren und ein zweites Verfahren, und deren zweckmäßige Weiterbildungen zur Lösung der eingangs angegebenen Aufgabe betrachtet worden, gemäß denen die administrativ vorzunehmenden Umschaltmaßnahmen zunächst jeweils nur im ersten Fernmeldenetz bzw. im zweiten Fernmeldenetz durchgeführt worden sind.

Im folgenden wird gezeigt, daß die Aufgabe der Erfindung gemäß einer dritten Verfahrensvariante erfindungsgemäß dadurch gelöst wird, daß zusätzlich zu den Verfahrensschritten des vorstehend aufgezeigten ersten Verfahrens auch die Verfahrensschritte des aufgezeigten zweiten Verfahrens zur Anwendung kommen. Bezogen auf die Verfahrensschritte gemäß den Ansprüchen 1 und 10 bedeutet dies, daß die Aufgabe der Erfindung bei einem Verfahren der eingangs genannten Art erfindungsgemäß dadurch gelöst wird, daß zunächst in der Ortsvermittlungsstelle des ersten Fernmeldenetzes und des zweiten Fernmeldenetzes jeweils eine sekundäre Wegeleitinformation gespeichert wird, welches bezüglich der betreffenden Teilnehmerstelle bei deren Nichtvorhandensein einen Verbindungsaufbau über die genannte Verbindungsstelle zu dem jeweils anderen Fernmeldenetz hin festlegt, daß sodann die primäre Wegeleitinformation in dem zweiten Fernmeldenetz bezüglich der betreffenden Teilnehmerstelle derart geändert wird, daß Verbindungen in dem zweiten Fernmeldenetz zu der betreffenden Teilnehmerstelle hin zu der Ortsvermittlungsstelle dieses zweiten Fernmeldenetzes aufgebaut werden, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird.

Die Erfindung bringt den Vorteil mit sich, daß die genannte Teilnehmerstelle, die von dem ersten Fernmeldenetz zu dem zweiten Fernmeldenetz umgeschaltet wird, ihre größtmögliche Erreichbarkeit im Zuge dieses "Umzuges" vom ersten Fernmeldenetz in das zweite Fernmeldenetz behält und dabei stets unter ihrer Rufnummer erreichbar ist bzw. bleibt, unter der sie im ersten Fernmeldenetz ursprünglich erreichbar war. Dadurch, daß in den Ortsvermittlungsstellen der beiden Fernmeldenetze die erwähnte sekundäre Wegeleitinformation gespeichert wird, die praktisch lediglich bei Nichtvorhandensein, das heißt bei Noch-Nicht-Angeschlossensein bzw. bei Nicht-Mehr-Angeschlossensein der betrachteten Teilnehmerstelle aktiv ist, ist die genannte Teilnehmerstelle solange im ersten Fernmeldenetz voll erreichbar, wie sie an deren Ortsvermittlungsstelle noch angeschlossen ist, und sie ist sofort in dem zweiten Fernmeldenetz wieder voll erreichbar, wenn sie an deren Ortsvermittlungsstelle angeschaltet ist. Die Nichterreichbarkeit der betreffenden Teilnehmerstelle reduziert sich damit lediglich auf die kurze Dauer des Umschaltens vom ersten Fernmeldenetz zum zweiten Fernmeldenetz, das heißt, die betreffende Teilnehmerstelle ist praktisch ohne Unterbrechung stets erreichbar und kann selbst stets Verbindungen aufbauen. Der Aufbau von Verbindungen von der genannten Teilnehmerstelle zu anderen Teilnehmerstellen in beiden Fernmeldenetzen ist ebenfalls praktisch stets ermöglicht.

Vorzugsweise werden mit der Speicherung der sekundären Wegeleitinformationen in den Ortsvermittlungsstellen der beiden Fernmeldenetze bezüglich der genannten Teilnehmerstelle weitere Angaben festgehalten, die im Zuge von zu der jeweiligen Ortsvermittlungsstelle hin gelangenden Verbindungswünschen bezüglich der betreffenden Teilnehmerstelle in der Ortsvermittlungsstelle des ersten Fernmeldenetzes einen Hinweis auf eine im Wechsel befindliche Teilnehmerstelle und in der Ortsvermittlungsstelle des zweiten Fernmeldenetzes einen Hinweis auf einen Teilnehmer im Wechsel liefern, und daß diese weiteren Angaben im Zuge eines Verbindungsaufbaus zu der betreffenden Teilnehmerstelle hin derart ausgewertet werden, daß in dem Fall, daß die betreffende Teilnehmerstelle an der zugehörigen Ortsvermittlungsstelle noch bzw. schon angeschlossen ist, der Verbindungsaufbau zu der betreffenden Teilnehmerstelle über diese Ortsvermittlungsstelle erfolgt, während bei noch nicht bzw. nicht mehr an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle zu unterscheiden, daß die betreffende Teilnehmerstelle noch bzw. nicht mehr an der einen Ortsvermittlungsstelle und noch nicht bzw. schon an der anderen Ortsvermittlungsstelle angeschlossen ist.

Zweckmäßigerweise wird zur Aktivierung der sekundären Wegeleitinformation bezüglich der betreffenden Teilnehmerstelle in der jeweiligen Ortsvermittlungsstelle die Anschlußleitung der betreffenden Teilnehmerstelle in dem Fall, daß es sich um eine analoge Teilnehmerstelle handelt, geerdet oder kurzgeschlossen, und sie wird in dem Fall, daß es sich um eine digitale Teilnehmerstelle handelt, ständig mit einem Trägersignal beaufschlagt. Dadurch kann das Nichtangeschlossensein bzw. das Angeschlossensein der betreffenden Teilnehmerstelle an der jeweiligen Ortsvermittlungsstelle schnell und eindeutig erkannt werden.

Vorzugsweise wird nach dem Anschalten der betreffenden Teilnehmerstelle an der Ortsvermittlungsstelle des zweiten Fernmeldenetzes die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil mit sich, daß unnötige Belastungen des ersten Fernmeldenetzes im Zuge des Aufbaus von Verbindungen zu der genannten Teilnehmerstelle hin vermieden werden können.

Vorzugsweise werden anschließend auch die sekundären Wegeleitinformationen bezüglich der betreffenden Teilnehmerstelle in den Ortsvermittlungsstellen der beiden Fernmeldenetze gelöscht. Diese sekundären Wegeleitinformationen sind nach Umschaltung der Teilnehmerstelle entbehrlich und brauchen daher nicht mehr in den Ortsvermittlungsstellen gespeichert zu werden.

Zweckmäßigerweise werden in der Ortsvermittlungsstelle des ersten Fernmeldenetzes auch Angaben bezüglich der betreffenden Teilnehmerstelle, die dort bisher angeschlossen war, gelöscht. Damit ist das Teilnehmerverzeichnis in der betreffenden Ortsvermittlungsstelle wieder aktualisiert und den tatsächlich vorliegenden Verhältnissen entsprechend in Ordnung gebracht.

Es ist auch von Vorteil, daß in der Ortsvermittlungsstelle des zweiten Fernmeldenetzes die dort zusammen mit der sekundären Wegeleitinformation zuvor gespeicherte Angabe, gemäß der sich die betreffende Teilnehmerstelle in Wechsel befindet, in den Anschluß der betreffenden Teilnehmerstelle an dieser Ortsvermittlungsstelle angebende Angaben geändert wird. Damit ist auch in dieser Ortsvermittlungsstelle den tatsächlich vorliegenden Gegebenheiten durch Aktualisierung gerecht geworden.

Zweckmäßigerweise können die primären und sekundären Wegeleitinformationen im jeweiligen Fernmeldenetz entweder lokal auf Vermittlungsstellenebene oder netzzentral gespeichert und zur Verfügung gestellt werden. Dies bringt den Vorteil der Anwendbarkeit des erfindungsgemäßen Verfahrens in allen gebräuchlichen Netzarchitekturen heutiger Fernmeldenetze mit sich.

Vorzugsweise wird eine im Zuge des Aufbaus ein und derselben Verbindung mehrfach über die Verbindungsstelle zwischen den beiden Fernmeldenetzen erfolgende Verbindungsführung durch eine Zählung des Verbindungsdurchgangs durch jeweils beteiligte Transitknoten erfaßt und der Abbau der betreffenden Verbindung wird bei Überschreiten einer festgelegten Anzahl solcher Verbindungsdurchgänge bewirkt. Derartige Verbindungsführungen können jedoch ebenso vorteilhaft durch besondere Maßnahmen in den beteiligten Ortsvermittlungsstellen OV1, OV2 vermieden werden. Eine dieser besonderen Maßnahmen kann z.B. darin bestehen, daß die die Verbindung an das weitere Netz weiterleitende Ortsvermittlungsstelle erneute Belegungen der Teilnehmerstelle während einer Schutzzeit generell zurückweist, womit derartige mehrfach über die Verbindungsstelle zwischen den Netzen geführte Verbindungen in einfacher Weise abgebaut werden. Damit kann die Belastung der beiden Fernmeldenetze und der Übergangsstelle in dem Fall verringert werden, daß zu der betreffenden Teilnehmerstelle hin Verbindungen in dem Fall aufzubauen sind, daß diese gerade umgeschaltet wird bzw. wegen Nichtangeschlossenseins an beiden Fernmeldenetzen oder wegen eines tatsächlichen Leitungsfehlers während der Umschaltphase nicht erreichbar ist.

Auch in dem Falle, daß die Teilnehmerstelle nicht direkt an mindestens einer der Ortsvermittlungsstellen angeschlossen ist, kann das erfindungsgemäße Verfahren in vorteilhafter Weise zur Anwendung kommen. In diesem Falle ist die Teilnehmerstelle über eine Zugriffsnetzwerk-Schnittstelle an mindestens einer der Ortsvermittlungsstellen angeschlossen bzw. anzuschließen und als Kriterium für eine Aktivierung bzw. Deaktivierung des Verbindungsaufbaus zu der betreffenden Teilnehmerstelle hin entsprechend der sekundären Wegeleitinformationen wird die an die jeweilige Ortsvermittlungsstelle seitens des Zugriffsnetzwerkes signalisierte Verfügbarkeit/Nichtverfügbarkeit der Teilnehmerstelle herangezogen.

Hiermit ist der Vorteil verbunden, daß das Verfahren auch in Netzen mit modernen Netzarchitekturen eingesetzt werden kann, in welchen zunehmend Zugriffsnetzwerke die Funktionen von Teilnehmeranschlußkonzentratoren bereitstellen.

Anhand von Zeichnungen wird die Erfindung nachstehend beispielsweise näher erläutert.
- Fig. 1: zeigt schematisch ein erstes Fernmeldenetz und ein zweites Fernmeldenetz, wobei an dem ersten Fernmeldenetz eine Teilnehmerstelle angeschlossen ist, die von beiden Fernmeldenetzen aus erreichbar ist und die an das zweite Fernmeldenetz angeschaltet werden soll.
- Fig. 2 und 3: veranschaulichen Umschaltmaßnahmen gemäß einer ersten Ausführungsform der Erfindung.
- Fig. 4 und 5: veranschaulichen Umschaltmaßnahmen gemäß einer zweiten Ausführungsform der Erfindung.
- Fig. 6 bis 8: veranschaulichen Umschaltmaßnahmen gemäß einer dritten Ausführungsform der Erfindung.

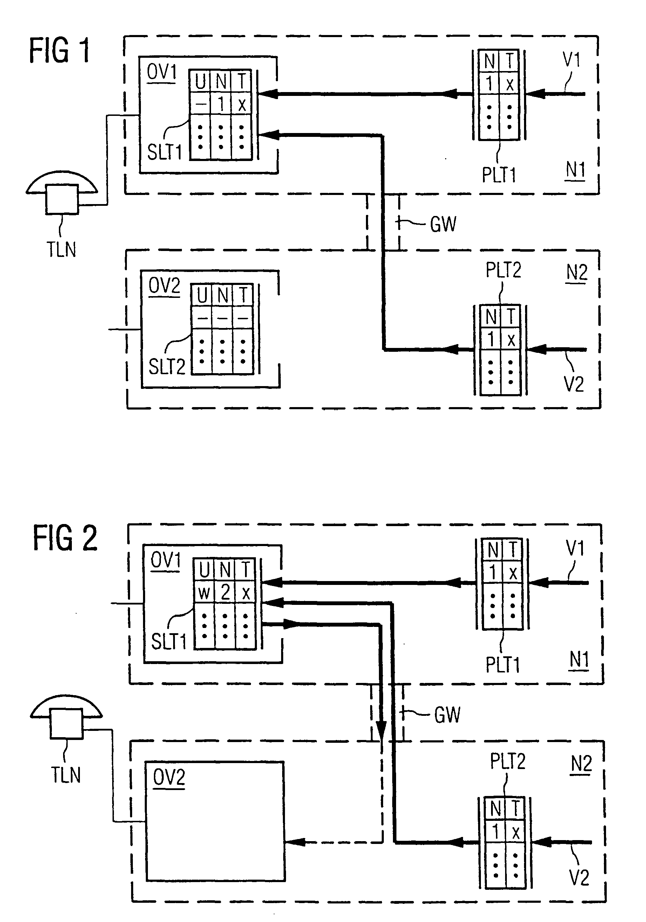

Fig. 1 zeigt bezüglich der nachstehend im einzelnen erläuterten Verfahren gemäß der Erfindung den Ausgangszustand der beiden Fernmeldenetze N1 und N2, die über wenigstens eine Verbindungsstelle GW miteinander verbunden sind. Bevor auf diese Verfahren eingegangen wird, soll zunächst der für das Verständnis der Erfindung notwendige grundsätzliche Aufbau der beiden Fernmeldenetze N1 und N2 betrachtet werden.

Jedes der beiden Fernmeldenetze N1 und N2 weist eine Anzahl von Vermittlungsstellen auf, von denen im vorliegenden Fall lediglich die Ortsvermittlungsstellen OV1 und OV2 angedeutet sind. An der Ortsvermittlungsstelle OV1 des Fernmeldenetzes N1 ist gemäß Fig. 1 die Teilnehmerstelle TLN angeschlossen, die zum Fernmeldenetz N2 umgeschaltet werden soll.

In den Fernmeldenetzen N1 und N2 ist jeweils eine Tabelle PLT1 bzw. PLT2 angedeutet, die für jede Teilnehmerstelle im Fernmeldenetz N1 und auch im Fernmeldenetz N2 eine primäre Wegeleitinformation (die auch als Routing-Information bezeichnet wird) enthält. Die beiden Tabellen PLT1 und PLT2 für primäre Wegeleitinformationen sind als einfache Tabellen angedeutet, die zwei Spalten T und N aufweist. In der Spalte T kann beispielsweise die Rufnummer der jeweiligen Teilnehmerstelle enthalten sein, und in der Spalte N kann eine Angabe über das Fernmeldenetz enthalten sein, an welchem die jeweilige Teilnehmerstelle angeschlossen ist. Gemäß Fig. 1 ist in der Tabelle PLT1 in der Spalte T ein x - das sei die Rufnummer der Teilnehmerstelle TLN - eingetragen, und in der Spalte N ist in dieser Tabelle eine 1 eingetragen. Dies bedeutet, daß ein Verbindungswunsch V1 bzw. ein Verbindungsaufbau innerhalb dieses Fernmeldenetzes N1 zu der Teilnehmerstelle TLN mit der Rufnummer x in diesem Fernmeldenetz N1 aufgebaut wird, im vorliegenden Fall zu der Ortsvermittlungsstelle OV1 hin.

Die beiden Fernmeldenetze N1 und N2 enthalten unter Umständen jeweils noch eine Tabelle SLT1 bzw. SLT2 für sekundäre Wegeleitinformationen, worauf nachstehend noch näher eingegangen wird. Gemäß Fig. 1 enthalten diese Tabellen SLT1 und SLT2 jeweils drei Spalten T, N und U, wobei lediglich die Tabelle SLT1 in der Spalte N die Rufnummer x der Teilnehmerstelle TLN und in der Spalte N eine 1, das heißt einen Hinweis auf die Erreichbarkeit dieser Teilnehmerstelle im ersten Fernmeldenetz N1 enthält. In der entsprechenden Tabelle SLT2 des zweiten Fernmeldenetzes N2 befinden sich zu diesem Zeitpunkt bezüglich der Teilnehmerstelle TLN noch keine Angaben.

Die in den vorstehend betrachteten Tabellen PLT1, PLT2, SLT1 und SLT2 gespeicherten primären bzw. sekundären Wegeleitinformationen können, wie dargestellt, im jeweiligen Netz lokal auf Vermittlungsstellenebene oder aber auch netzzentral gespeichert und bereitgestellt werden.

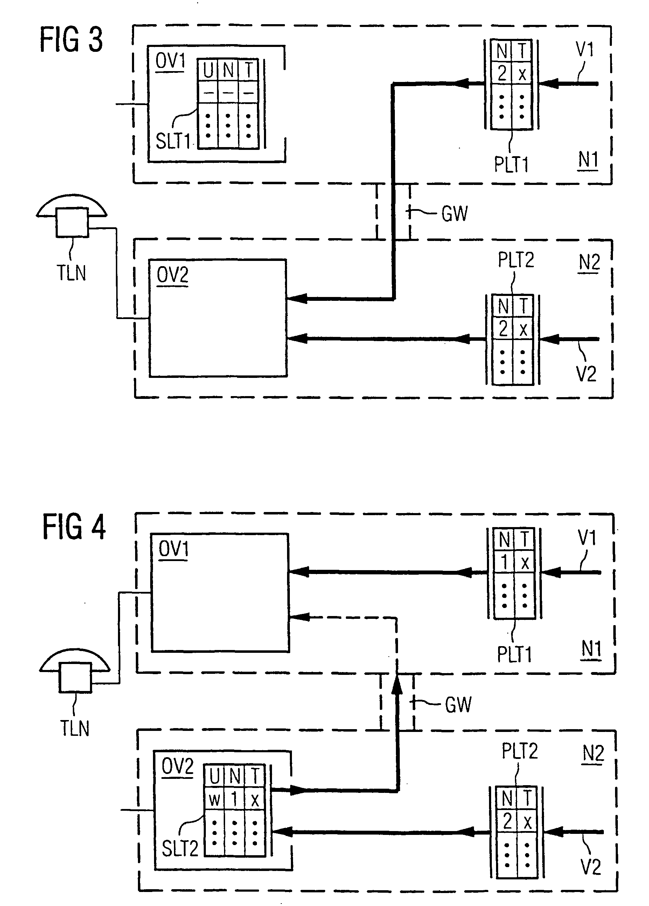

Nunmehr wird das Verfahren gemäß der Erfindung entsprechend der ersten Ausführungsform bzw. Alternative unter Bezugnahme auf Fig. 2 und 3 erläutert.

Gemäß Fig. 2 wird in die Tabelle SLT1 im ersten Fernmeldenetz N1 zunächst eine sekundäre Wegeleitinformation bezüglich der Teilnehmerstelle TLN in der Spalte T ein x - die Rufnummer der betreffenden Teilnehmerstelle TLN - eingetragen, und in deren zugehöriger Spalte N wird eine 2 eingetragen. In der weiteren Spalte U der betreffenden Tabelle SLT1 ist bezüglich der Teilnehmerstelle TLN mit der Rufnummer x ein Zeichen w eingetragen. Bei diesem Zeichen bzw. bei dieser Angabe handelt es sich um eine zusätzliche Angabe, die im Zuge von zu der jeweiligen Ortsvermittlungsstelle hin gelangenden Verbindungswünschen bezüglich der betrachteten Teilnehmerstelle TLN einen Hinweis auf eine im Wechsel befindliche Teilnehmerstelle liefert. Die Auswertung dieser Angabe im Zuge eines Verbindungsaufbaus zu der betreffenden Teilnehmerstelle TLN hin wird weiter unten noch näher erläutert werden.

Vor dem Umschalten der Teilnehmerstelle TLN vom ersten Fernmeldenetz N1 zum zweiten Fernmeldenetz N2 auftretende Verbindungswünsche V1 und V2 werden von beiden Fernmeldenetzen N1 und N2 zur Ortsvermittlungsstelle OV1 des ersten Fernmeldenetzes N1 hin geleitet. Ist die Teilnehmerstelle TLN indessen von der Ortsvermittlungsstelle OV1 des ersten Fernmeldenetzes N1 abgeschaltet und an der Ortsvermittlungsstelle OV2 des zweiten Fernmeldenetzes N2 angeschaltet, wie dies in Fig. 2 veranschaulicht ist, so werden solche Verbindungswünsche V1 und V2 jeweils zunächst zur Ortsvermittlungsstelle 0V1 des ersten Fernmeldenetzes N1 hin gelangen und aufgrund der dort vorhandenen sekundären Wegeleitinformation über die genannte Verbindungsstelle GW zwischen den beiden Fernmeldenetzen N1 und N2 zum zweiten Fernmeldenetz N2 und in diesem zur Ortsvermittlungsstelle OV2 (siehe gestrichelte Linie)hin geführt.

Im Anschluß an die vorstehend betrachteten Maßnahmen kann die primäre Wegeleitinformation in dem zweiten Fernmeldenetz N2 bezüglich der betreffenden Teilnehmerstelle TLN derart geändert werden, daß Verbindungen in dem zweiten Fernmeldenetz N2 zu der betreffenden Teilnehmerstelle TLN hin direkt zu der zugehörigen Ortsvermittlungsstelle OV2 dieses zweiten Fernmeldenetzes N2 hin aufgebaut werden.

Damit ist die Teilnehmerstelle TLN, deren Umschaltung nach dem Einrichten der erwähnten sekundären Wegeleitinformation in der Ortsvermittlungsstelle OV1 des ersten Fernmeldenetzes N1 umgeschaltet wird, praktisch sofort nach Umschaltung und Änderung der primären Wegeleitinformation im zweiten Fernmeldenetz von beiden Netzen erreichbar.

Eine sekundäre Wegeleitinformation gemäß Tabelle SLT2 ist in der Ortsvermittlungsstelle OV2 des zweiten Fernmeldenetzes N2 nicht erforderlich.

In Fig. 3 ist veranschaulicht, daß in der Tabelle PLT2 für primäre Wegeleitinformationen im zweiten Fernmeldenetz N2 eine Änderung in der Spalte N bezüglich der Teilnehmerstelle mit der Rufnummer x von 1 in 2 vorgenommen ist.

Um nun die Verbindungsführung vom ersten Fernmeldenetz N1 bezüglich der Teilnehmerstelle TLN zum zweiten Fernmeldenetz N2 bezogen auf die in Fig. 2 dargestellten Verhältnisse zu vereinfachen, ist gemäß Fig. 3 vorgesehen, daß nach dem Anschalten der Teilnehmerstelle TLN an der Ortsvermittlungsstelle OV2 des zweiten Fernmeldenetzes N2 auch die primäre Wegeleitinformation in dem ersten Fernmeldenetz N1 so geändert wird, daß vom ersten Fernmeldenetz N1 ausgehende Verbindungswünsche V1 zu der Teilnehmerstelle TLN vom ersten Fernmeldenetz N1 über die Verbindungsstelle GW zum zweiten Fernmeldenetz N2, und zwar zu deren Ortsverbindungsstelle OV2 hin geleitet werden.

Nachdem die gemäß Fig. 2 in der Tabelle SLT1 der Ortsvermittlungsstelle OV1 des ersten Fernmeldenetzes N1 bezüglich der Teilnehmerstelle TLN mit der Rufnummer x eingetragene sekundäre Wegeleitinformation nunmehr entbehrlich ist, wird sie derart gelöscht; dieser nunmehr erreichte Zustand ist in Fig. 3 veranschaulicht.

Überdies werden in der betreffenden Tabelle SLT1 zuvor bezüglich der Teilnehmerstelle TLN mit der Rufnummer x eingetragene Angaben gelöscht, da sie hier nicht mehr benötigt werden.

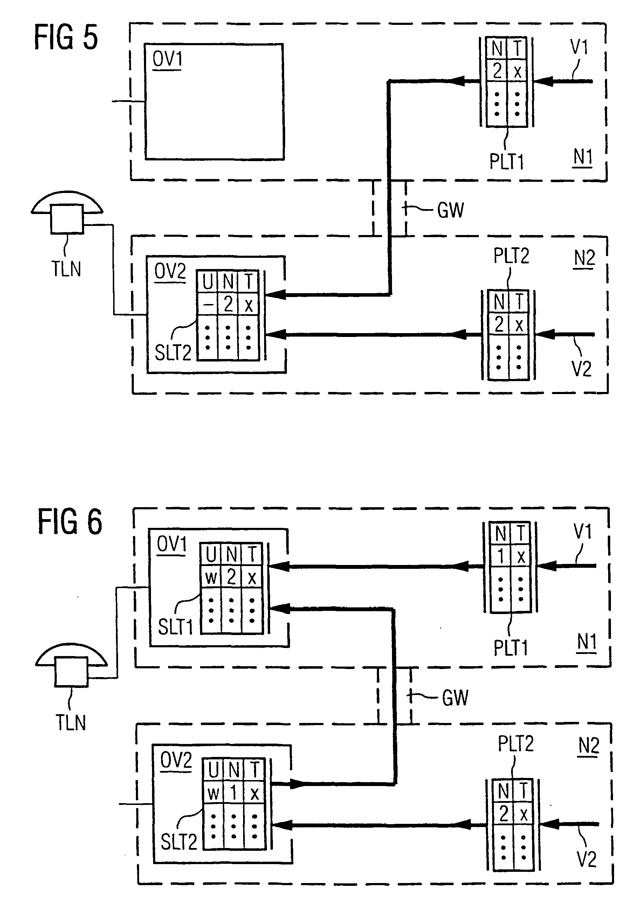

An dieser Stelle sei angemerkt, daß auf die nähere Bedeutung der in den Tabellen für sekundäre Wegeleitinformation eingetragenen Angaben in den Spalten U und über die Charakterisierung einer "Umzugs"-Teilnehmerstelle als im Wechsel befindlich weiter unten im Zusammenhang mit den Fig. 6 bis 8 noch näher eingegangen wird.

Im folgenden wird unter Bezugnahme auf die Fig. 4 und 5 eine zweite Ausführungsform bzw. Variante des Verfahrens gemäß der Erfindung erläutert.

Gemäß Fig. 4 wird zunächst in der Tabelle SLT2 für sekundäre Wegeleitinformationen in der Ortsvermittlungsstelle OV2 des zweiten Fernmeldenetzes N2 bezüglich der Teilnehmerstelle mit der Rufnummer x eine sekundäre Wegeleitinformation 1 gespeichert, die bezüglich der Teilnehmerstelle TLN bei deren Nichterreichbarkeit bzw. Vorhandensein im zweiten Fernmeldenetz N2 einen Verbindungsaufbau über die genannte Verbindungsstelle GW zu dem ersten Fernmeldenetz N1 und in diesem zur Ortsvermittlungsstelle OV1 (siehe gestrichelte Linie) hin festlegt. Außerdem wird in der Spalte U der betreffenden Tabelle SLT2 bezüglich der Teilnehmerstelle TLN mit der Rufnummer x ein w (Teilnehmer im Wechsel) eingetragen. Sodann wird die primäre Wegeleitinformation in der Tabelle PLT2 des zweiten Fernmeldenetzes N2 bezüglich der genannten Teilnehmerstelle TLN derart geändert, daß Verbindungen von dem zweiten Fernmeldenetz N2 zu der betreffenden Teilnehmerstelle TLN hin zur Ortsvermittlungsstelle OV2 dieses zweiten Fernmeldenetzes N2 aufgebaut werden.

Solange die Teilnehmerstelle TLN noch an der Ortsvermittlungsstelle OV1 des ersten Fernmeldenetzes N1 angeschlossen ist, ist sie damit für Verbindungswünsche V1 und V2 von beiden Fernmeldenetzen N1 und N2 voll erreichbar.

Ausgehend von den zuvor im Zusammenhang mit Fig. 4 betrachteten Verfahrensmaßnahmen bzw. Verhältnissen wird anschließend die Teilnehmerstelle TLN von der Ortsvermittlungsstelle OV1 des ersten Fernmeldenetzes N1 abgeschaltet und an der Ortsvermittlungsstelle OV2 des zweiten Fernmeldenetzes N2 angeschaltet. Damit ist ihre Erreichbarkeit für Verbindungswünsche V2 aus dem Fernmeldenetz N2 weiterhin voll gegeben, während sie für Verbindungswünsche V1 aus dem ersten Fernmeldenetz N1 nunmehr nicht mehr erreichbar ist. Dies ändert sich indessen nach Durchführung von Verfahrensmaßnahmen, deren Ergebnisse in Fig. 5 veranschaulicht sind.

Die vorstehend erwähnten Maßnahmen betreffen zum einen eine Deaktivierung der sekundären Wegeleitinformation bezüglich der Teilnehmerstelle TLN in der Ortsvermittlungsstelle OV2 des zweiten Fernmeldenetzes nach Anschalten der betreffenden Teilnehmerstelle TLN an dieser Ortsvermittlungsstelle und zum anderen eine Maßnahme, gemäß der die primäre Wegeleitinformation in dem ersten Fernmeldenetz N1, und zwar in deren Tabelle PLT1, derart geändert wird, daß von dem ersten Fernmeldenetz ausgehende Verbindungswünsche V1 zu der Teilnehmerstelle TLN hin vom ersten Fernmeldenetz N1 über die Verbindungsstelle GW zwischen den beiden Fernmeldenetzen N1 und N2 zu dem zweiten Fernmeldenetz N2 hin geleitet werden. Diesen Maßnahmen Rechnung tragend ist die Tabelle PLT1 für primäre Wegeleitinformationen im ersten Fernmeldenetz N1 derart geändert, daß bezüglich der Teilnehmerstelle TLN mit der Rufnummer x nunmehr in deren Spalte N eine 2 eingetragen ist.
Nach Durchführung der vorstehend bezeichneten Maßnahmen ist die nunmehr an der Ortsvermittlungsstelle OV2 des zweiten Fernmeldenetzes N2 angeschlossene Teilnehmerstelle TLN unter ihrer ursprünglichen Rufnummer x von beiden Fernmeldenetzen N1 und N2 wieder voll erreichbar und kann Verbindungen zu Teilnehmerstellen dieser Fernmeldenetze N1 und N2 ohne weiteres herstellen.

Die in der Spalte U der Tabelle SLT2 bezüglich der Teilnehmerstelle TLN mit der Rufnummer x eingetragene Angabe w wird in entsprechender Weise wie dies im Zusammenhang mit Fig. 2 erläutert worden ist, im Zuge eines Verbindungsaufbaus zu dieser Teilnehmerstelle TLN hin derart ausgewertet, daß in dem Fall, daß die betreffende Teilnehmerstelle TLN noch nicht an der Ortsvermittlungsstelle OV2 des zweiten Fernmeldenetzes N2 angeschlossen ist, diese sekundäre Wegeleitinformation aktiviert ist und zur Verbindungsweiterführung (V2) vom zweiten Fernmeldenetz über die Verbindungsstelle GW zum ersten Fernmeldenetz, und zwar dort zur Ortsvermittlungsstelle OV1 hin führt, an der die Teilnehmerstelle TLN ja noch angeschlossen ist. In dem Fall, daß die Teilnehmerstelle TLN bereits an der Ortsvermittlungsstelle OV2 des zweiten Fernmeldenetzes N2 angeschlossen ist, wird die betreffende sekundäre Wegeleitinformation W nicht aktiviert, sondern vielmehr wird die betreffende Teilnehmerstelle TLN aufgrund von Verbindungswünschen V2 im zweiten Fernmeldenetz N2 direkt erreichbar sein.

Vorstehend sind anhand der Fig. 2 und 3 sowie anhand der Fig. 4 und 5 zwei Ausführungsformen bzw. Varianten des Verfahrens gemäß der Erfindung erläutert worden, gemäß denen Verfahrensmaßnahmen zunächst nur vom Fernmeldenetz N1 bzw. vom Fernmeldenetz N2 aus erfolgen und denen dann Verfahrensmaßnahmen nachfolgen, die im jeweils anderen Fernmeldenetz N2 bzw. N1 ausgeführt werden.

Nachstehend wird anhand der Fig. 6 bis 8 eine Ausführungsform bzw. Variante des Verfahrens gemäß der Erfindung erläutert, welche die Vorteile der beiden vorstehend erläuterten Verfahrensvarianten zusammenfaßt bzw. gemeinsam nutzt.

Gemäß Fig. 6 sind die Verhältnisse zu Beginn des Umschaltens der an den ersten Fernmeldenetz N1 angeschlossenen Teilnehmerstelle TLN von diesem ersten Fernmeldenetz N1 zu dem zweiten Fernmeldenetz N2 veranschaulicht. Zunächst werden in den Ortsvermittlungsstellen OV1 und OV2, und zwar genauer gesagt in den Tabellen SLT1 und SLT2 sogenannte sekundäre Wegeleitinformationen gespeichert. Diese sekundären Wegeleitinformationen geben an, in welcher Ortsvermittlungsstelle bzw. in welchem Fernmeldenetz die betrachtete Teilnehmerstelle TLN angeschlossen sein wird bzw. noch angeschlossen ist. Mit anderen Worten ausgedrückt heißt dies, daß die in der Tabelle SLT1 gespeicherte sekundäre Wegeleitinformation aus der in der Spalte T eingetragenen Rufnummer x und aus der in der Spalte N eingetragenen Netzangabe 2 bedeutet, daß in dem Fernmeldenetz N1 auftretende Verbindungswünsche zu der Teilnehmerstelle TLN an sich von der Ortsvermittlungsstelle OV1 zu dem Fernmeldenetz N2 weiterzuleiten sind, was allerdings im vorliegenden Fall entbehrlich ist, da die Teilnehmerstelle TLN noch an der Ortsvermittlungsstelle OV1 angeschlossen ist. Der im Zuge eines Verbindungswunsches bzw. Verbindungsaufbaus V1 in dem Fernmeldenetz N1 ablaufende vermittlungstechnische Vorgang erkennt aus der primären Wegeleitinformation, die in der Tabelle PLT1 enthalten ist, daß die Verbindung zu der Teilnehmerstelle TLN mit der Rufnummer x zu der Ortsvermittlungsstelle OV1 hin aufzubauen ist und daß wegen des Vorhandenseins der betreffenden Teilnehmerstelle diese Verbindung nicht zum Fernmeldenetz N2 umzuleiten ist.

Die in der Tabelle SLT2 bezüglich der Teilnehmerstelle TLN eingetragenen Angaben T=x und N=1 kommen dann nicht zum Tragen, wenn die primäre Wegeleitinformation in dem zweiten Fernmeldenetz N2 noch bezüglich der betrachteten Teilnehmerstelle TLN auf das erste Fernmeldenetz N1 verweist.

In dem Fernmeldenetz N2 wird allerdings die primäre Wegeleitinformation in der Tabelle PLT2 bezüglich der betrachteten Teilnehmerstelle TLN nunmehr derart geändert, daß Verbindungen bzw. Verbindungswünsche V2 in diesem zweiten Fernmeldenetz N2 zu der betreffenden Teilnehmerstelle TLN mit der Rufnummer x hin zu der Ortsvermittlungsstelle OV2 dieses zweiten Fernmeldenetzes N2 aufgebaut werden. In der Spalte N der Tabelle PLT2 ist bezüglich der Rufnummer x, die in der Spalte T dieser Tabelle enthalten ist, nunmehr im Unterschied zur Fig. 1 eine 2 eingetragen.

Ein diese primäre Wegeleitinformation in dem zweiten Fernmeldenetz N2 berücksichtigende Verbindung zu der Teilnehmerstelle TLN mit der Rufnummer x erfolgt also zunächst zu der Ortsvermittlungsstelle OV2 des zweiten Fernmeldenetzes N2 hin und wird dort aufgrund der in der dortigen Tabelle SLT2 eingetragenen sekundären Wegeleitinformation und wegen des Nichtvorhandenseins der gewünschten Teilnehmerstelle TLN - diese ist noch an der Ortsvermittlungsstelle OV1 des ersten Fernmeldenetzes N1 angeschlossen - über die gemeinsame Verbindungsstelle GW zu der Ortsvermittlungsstelle OV1 des ersten Fernmeldenetzes N1 weitergeleitet. Damit ist die Teilnehmerstelle TLN nach wie vor unter ihrer Rufnummer x in beiden Fernmeldenetzen N1 und N2 erreichbar.

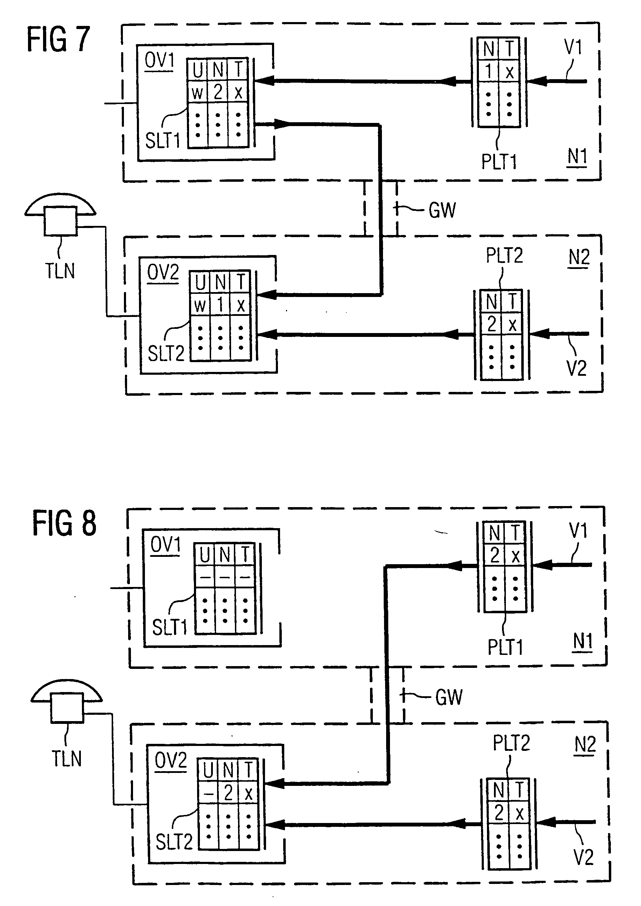

Bevor auf die Fig. 7 und 8 eingegangen wird, sei nochmals kurz auf die für die Speicherung der sekundären Wegeleitinformationen vorgesehenen Tabellen SLT1 und SLT2 näher eingegangen. Diese Tabellen weisen jeweils noch eine Spalte U auf, in der jeweils ein w eingetragen ist. Bei diesen Angaben handelt es sich um zusätzliche Angaben, die im Zuge von zu der jeweiligen Ortsvermittlungsstelle hin gelangenden Verbindungswünschen bezüglich der betrachteten Teilnehmerstelle TLN im Falle der Ortsvermittlungsstelle OV1 des ersten Fernmeldenetzes N1 einen Hinweis auf eine im Wechsel befindliche Teilnehmerstelle und im Falle der Ortsvermittlungsstelle OV2 des zweiten Fernmeldenetzes N2 einen Hinweis auf einen Teilnehmer im Wechsel liefern. Diese Angaben können durch den vermittlungstechnischen Prozeß im Zuge des jeweiligen Verbindungsaufbaus zu der Teilnehmerstelle TLN hin derart ausgewertet werden, daß in dem Fall, daß die Teilnehmerstelle TLN noch an der Ortsvermittlungsstelle OV1 oder schon an der Ortsvermittlungsstelle OV2 angeschlossen ist, der Verbindungsaufbau zu dieser Teilnehmerstelle TLN über die betreffende Ortsvermittlungsstelle erfolgt. Wenn hingegen die betreffende Teilnehmerstelle TLN noch nicht an der Ortsvermittlungsstelle OV2 bzw. nicht mehr an der Ortsvermittlungsstelle OV1 angeschlossen ist, dann werden die betreffenden Angaben im Zuge des Aufbaus der jeweiligen Verbindung zu der Teilnehmerstelle TLN hin vom ablaufenden vermittlungstechnischen Prozeß dahingehend ausgewertet, daß die zugehörige sekundäre Wegeleitinformation zur Anwendung gelangt, also der Verbindungswunsch zum jeweils anderen Fernmeldenetz weitergeleitet wird.

Im Hinblick auf die Auswertung der vorstehend betrachteten Angaben in den Tabellen SLT1 und SLT2 sei noch angemerkt, daß als Kriterium zur Aktivierung/Deaktivierung der sekundären Wegeleitinformation bezüglich der jeweiligen Teilnehmerstelle in den betrachteten Ortsvermittlungsstellen der Fehlerzustand der Teilnehmeranschlußleitung herangezogen werden kann. In dem Fall, daß es sich dabei um eine analoge Teilnehmerstelle handelt, kann der Fehlerzustand durch Erdung oder Kurzschluß nach Wegschalten bzw. vor Anschalten der Teilnehmerleitung hervorgerufen werden; in dem Fall, daß es sich um eine digitale Teilnehmerstelle handelt, kann deren Anschlußleitung ständig mit einem Trägersignal beaufschlagt werden, was bei offener Leitung eine schnelle Leitungsfehlererkennung bzw. bei angeschlossener Teilnehmerstelle TLN eine schnelle Fehlerendeerkennung ermöglicht.

Fig. 7 veranschaulicht den Verfahrensschritt, gemäß dem die Teilnehmerstelle TLN von der Ortsvermittlungsstelle OV1 des ersten Fernmeldenetzes N1 abgeschaltet und an der Ortsvermittlungsstelle OV2 des zweiten Fernmeldenetzes N2 angeschaltet worden ist. Dabei wird die sekundäre Wegeleitinformation bezüglich der Teilnehmerstelle TLN in der Tabelle SLT2 deaktiviert - was das Erkennen eines Leitungsfehlerendes ermöglicht - und die entsprechende sekundäre Wegeleitinformation in der Tabelle SLT1 wird aktiviert, da ein Leitungsfehler hervorgerufen wird. Nunmehr ist die Teilnehmerstelle TLN in dem Fernmeldenetz N2 direkt für von dort auftretende Verbindungswünsche V2 erreichbar, während bei im Fernmeldenetz N1 bezüglich der Teilnehmerstelle TLN mit der Rufnummer x auftretenden Verbindungswünschen V1 jetzt dort, und zwar genauer gesagt in der Ortsvermittlungsstelle OV1, die gleichen Vorgänge ablaufen, die zuvor anhand von Fig. 6 bezüglich der Ortsvermittlungsstelle OV2 des zweiten Fernmeldenetzes N2 erläutert worden sind. Die Teilnehmerstelle TLN ist also nach dem kurzen Umschaltaugenblick sofort wieder in bzw. von beiden Fernmeldenetzen N1 und N2 aus erreichbar.

Fig. 8 veranschaulicht schließlich die nächsten Verfahrensschritte, die noch ausgeführt werden. Zunächst wird nach dem Anschalten der Teilnehmerstelle TLN an der Ortsvermittlungsstelle OV2 des zweiten Fernmeldenetzes N2 die primäre Wegeleitinformation in der Tabelle PLT1 des ersten Fernmeldenetzes N1 so geändert, daß von dem ersten Fernmeldenetz N1 ausgehende Verbindungswünsche V1 zu der Teilnehmerstelle TLN hin von dem ersten Fernmeldenetz N1 über die genannte Verbindungsstelle GW zu dem zweiten Fernmeldenetz N2 hin geleitet werden.

Anschließend werden die sekundären Wegeleitinformationen bezüglich der Teilnehmerstelle TLN in den Ortsvermittlungsstellen OV1 und OV2 der beiden Fernmeldenetze N1 und N2 gelöscht.

Schließlich werden in der Ortsvermittlungsstelle OV1 des ersten Fernmeldenetzes N1 Angaben bezüglich der Teilnehmerstelle TLN, die dort bisher angeschaltet war, gelöscht, und in der Ortsvermittlungsstelle OV2 des zweiten Fernmeldenetzes N2 werden dort zusammen mit der sekundären Wegeleitinformation zuvor gespeicherte Angaben, gemäß denen sich die betreffende Teilnehmerstelle im Wechsel befindet, in Angaben geändert, die nunmehr den Anschluß der betreffenden Teilnehmerstelle TLN an der Ortsvermittlungsstelle OV2 angeben.

Damit sind gemäß Fig. 8 in den beiden Fernmeldenetzen N1 und N2 bezüglich der Teilnehmerstelle TLN gewissermaßen spiegelbildlich zu den ursprünglichen Verhältnissen, von denen gemäß Fig. 1 ausgegangen worden ist, entsprechende Verhältnisse hergestellt.

Bezüglich des vorstehend erläuterten Verfahrens gemäß der Erfindung sei noch angemerkt, daß der Fall auftreten kann, daß im Zuge des Aufbaus einer Verbindung diese mehrfach über die Verbindungsstelle GW zwischen den beiden Fernmeldenetzen N1 und N2 geführt werden, was als unerwünschte Netzbelastung angesehen wird. Um diese Netzbelastung zu reduzieren, können derartige Verbindungen über eine sogenannte Transitknotendurchgangszählung erfaßt und abgebaut werden. Derartige Verbindungsführungen können jedoch ebenso durch besondere Maßnahmen in den beteiligten Ortsvermittlungsstellen OV1, OV2 vermieden werden. Eine dieser besonderen Maßnahmen kann z.B. darin bestehen, daß die die betreffende Verbindung weiterleitende Ortsvermittlungsstelle für die Dauer einer Schutzzeit nach erfolgter Weiterleitung auf weitere Weiterleitungen bzw. Belegungsversuche zu der Teilnehmerstelle TLN hin verzichtet. Die Gefahr des Auftretens derartiger Verbindungen ist im vorliegenden Falle im wesentlichen auf die Zeitspanne beschränkt, innerhalb der die Teilnehmerstelle TLN vom ersten Fernmeldenetz N1 zum zweiten Fernmeldenetz N2 umgeschaltet wird.

Die Umschaltung der betrachteten Teilnehmerstelle TLN vom ersten Fernmeldenetz N1 zum zweiten Fernmeldenetz N2 ist vorstehend als physikalische Umschaltung erläutert worden, bei der die Teilnehmerstelle TLN direkt an die Ortsvermittlungsstelle angeschlossen ist. Gemäß neuer Netzarchitektur kann eine Teilnehmerstelle TLN jedoch auch an einem Zugriffsnetzwerk angeschlossen sein, welches über eine Zugriffsnetzwerk-Schnittstelle, z.B. eine V5.2-Schnittstelle, an der Ortsvermittlungsstelle angeschlossen ist. Als Kriterium für eine Aktivierung bzw. Deaktivierung des Verbindungsaufbaus zu einer derartig angeschlossenen Teilnehmerstelle TLN hin kann dabei entsprechend der jeweiligen sekundären Wegeleitinformation die der Ortsvermittlungsstelle über die Zugriffsnetzwerk-Schnittstelle signalisierte Verfügbarkeit/Nichtverfügbarkeit der Teilnehmerstellen TLN herangezogen werden.

Abschließend sei noch darauf hingewiesen, daß die primären und die sekundären Wegeleitinformationen in den betrachteten Fernmeldenetzen N1 und N2 entweder lokal oder zentral gespeichert und zur Verfügung gestellt werden können. Dies betrifft sowohl die Tabellen PLT1 bzw. PLT2 für primäre Wegleitinformationen als auch die Tabellen SLT1, SLT2 für sekundäre Wegeleitinformationen.

## Patentansprüche

1. Verfahren zum Umschalten einer an einem ersten Fernmeldenetz angeschlossenen Teilnehmerstelle von dem ersten Fernmeldenetz zu einem zweiten Fernmeldenetz, welches mit dem ersten Fernmeldenetz über mindestens eine Verbindungsstelle verbunden ist,
wobei in beiden Fernmeldenetzen bezüglich der betreffenden Teilnehmerstelle primäre Wegeleitinformationen, Routing-Informationen, enthalten sind, durch welche der Verbindungsaufbau von dem jeweiligen Fernmeldenetz zu der Ortsvermittlungsstelle hin festgelegt wird, an der die betreffende Teilnehmerstelle in dem ersten Fernmeldenetz angeschlossen ist,
**dadurch gekennzeichnet ,**
**daß** zunächst in **dem ersten Fernmeldenetz (N1)** eine sekundäre Wegeleitinformation gespeichert wird, welche bezüglich der betreffenden Teilnehmerstelle (TLN) bei deren Nichtvorhandensein für einen Verbindungsaufbau über die genannte Verbindungsstelle (GW) zu dem zweiten Fernmeldenetz (N2) herangezogen wird,
und **daß** schließlich die betreffende Teilnehmerstelle (TLN) von der Ortsvermittlungsstelle (OV1) des ersten Fernmeldenetzes (N1) abgeschaltet und an der Ortsvermittlungsstelle (OV2) des zweiten Fernmeldenetzes (N2) angeschaltet wird.

2. Verfahren nach Anspruch 1 **dadurch** gekenn-zeichnet, daß die primäre Wegeleitinformation in dem zweiten Fernmeldenetz (N2) bezüglich der betreffenden Teilnehmerstelle (TLN) derart geändert wird, daß Verbindungen in dem zweiten Fernmeldenetz (N2) zu der betreffenden Teilnehmerstelle (TLN) hin zu der Ortsvermittlungsstelle (OV2) dieses zweiten Fernmeldenetzes (N2) hin aufgebaut werden.

3. Verfahren nach Anspruch 1 oder 2, **dadurch** ge-kennzeichnet, daß mit der Speicherung der sekundären Wegeleitinformationen in dem ersten Fernmeldenetz (N1) bezüglich der genannten Teilnehmerstelle (TLN) weitere Angaben festgehalten werden, die im Zuge von zu der Ortsvermittlungsstelle (OV1) des ersten Fernmeldenetzes (N1) hin gelangenden Verbindungswünschen bezüglich der betreffenden Teilnehmerstelle (TLN) in der Ortsvermittlungsstelle (OV1) des ersten Fernmeldenetzes (N1) einen Hinweis auf eine im Wechsel befindliche Teilnehmerstelle liefern, und daß diese weiteren Angaben im Zuge eines Verbindungsaufbaus zu der betreffenden Teilnehmerstelle (TLN) hin derart ausgewertet werden, daß in dem Fall, daß die betreffende Teilnehmerstelle (TLN) an der Ortsvermittlungsstelle (OV1) des ersten Fernmeldenetzes (N1) noch angeschlossen ist, der Verbindungsaufbau zu der betreffenden Teilnehmerstelle (TLN) über diese Ortsvermittlungsstelle (OV1) erfolgt, während bei nicht mehr an der betreffenden Ortsvermittlungsstelle (OV1) angeschlossener Teilnehmerstelle (TLN) die zugehörige sekundäre Wegeleitinformation zur Anwendung gelangt.

4. Verfahren nach Anspruch 3, **dadurch** gekenn-zeichnet, daß zur Aktivierung der sekundären Wegeleitinformation bezüglich der betreffenden Teilnehmerstelle (TLN) in der Ortsvermittlungsstelle (OV1) des ersten Fernmeldenetzes (N1) ein beim Abschalten der betreffenden Teilnehmerstelle (TLN) hervorgerufener Fehler auf der Teilnehmerstellenanschlußleitung herangezogen wird.

5. Verfahren nach einem der Ansprüche 1 bis 4, **dadurch gekennzeichnet , daß** nach dem Abschalten der betreffenden Teilnehmerstelle (TLN) von der Ortsvermittlungsstelle (OV1) des ersten Fernmeldenetzes (N1) die primäre Wegeleitinformation in dem ersten Fernmeldenetz (N1) derart geändert wird, daß von dem ersten Fernmeldenetz (N1) ausgehende Verbindungswünsche zu der betreffenden Teilnehmerstelle (TLN) hin von dem ersten Fernmeldenetz (N1) über die genannte Verbindungsstelle (GW) zu dem zweiten Fernmeldenetz (N2) hin geleitet werden.

6. Verfahren nach Anspruch 5, **dadurch** gekenn-zeichnet, daß anschließend die sekundären Wegeleitinformationen bezüglich der betreffenden Teilnehmerstelle (TLN) in dem ersten Fernmeldenetz (N1) gelöscht werden.

7. Verfahren nach Anspruch 5 oder 6, **dadurch** ge-kennzeichnet, daß in dem ersten Fernmeldenetz (N1) Angaben bezüglich der betreffenden Teilnehmerstelle (TLN), die dort bisher angeschaltet war, gelöscht werden.

8. Verfahren nach Anspruch 4, **dadurch** gekenn-zeichnet, daß beim Abschalten der Teilnehmerstelle (TLN) in dem Fall, daß es sich um eine analoge Teilnehmerstelle handelt, ein Leitungsfehler in der Ortsvermittlungsstelle (OV1) des ersten Fernmeldenetzes (N1) durch Erd- oder Kurzschluß der zugehörigen Teilnehmerleitung hervorgerufen wird.

9. Verfahren nach Anspruch 4, **dadurch** gekenn-zeichnet, daß zur Leitungsfehlererkennung einer digitalen Teilnehmeranschlußleitung ein Trägersignal für die Dauer der Teilnehmerumschaltung permanent wirksam gemacht und seitens der Ortsvermittlungsstelle (OV1) des ersten Fernmeldenetzes (N1) überwacht wird.

10. Verfahren zum Umschalten einer an einem ersten Fernmeldenetz angeschlossenen Teilnehmerstelle von dem ersten Fernmeldenetz zu einem zweiten Fernmeldenetz, welches mit dem ersten Fernmeldenetz über mindestens eine Verbindungsstelle verbunden ist,
wobei in beiden Fernmeldenetzen bezüglich der betreffenden Teilnehmerstelle primäre wegeleitinformationen, Routing-Informationen, enthalten sind, durch welche der Verbindungsaufbau von dem jeweiligen Fernmeldenetz zu der Ortsvermittlungsstelle hin festgelegt wird, an der die betreffende Teilnehmerstelle in dem ersten Fernmeldenetz angeschlossen ist,
**dadurch gekennzeichnet ,**
**daß** zunächst in dem zweiten Fernmeldenetzes (N2) eine sekundäre Wegeleitinformation gespeichert wird, welche bezüglich der betreffenden Teilnehmerstelle (TLN) bei deren Nichtvorhandensein für einen Verbindungsaufbau über die genannte Verbindungsstelle (GW) zu dem ersten Fernmeldenetz (N1) herangezogen wird,
**daß** sodann die primäre Wegeleitinformation in dem zweiten Fernmeldenetz (N2) bezüglich der betreffenden Teilnehmerstelle (TLN) derart geändert wird, daß Verbindungen in dem zweiten Fernmeldenetz (N2) zu der betreffenden Teilnehmerstelle (TLN) hin zu der Ortsvermittlungsstelle (OV2) dieses zweiten Fernmeldenetzes (N2) aufgebaut werden,
und **daß** schließlich die betreffende Teilnehmerstelle (TLN) von der Ortsvermittlungsstelle (OV1) des ersten Fernmeldenetzes (N1) abgeschaltet und an der Ortsvermittlungsstelle (OV2) des zweiten Fernmeldenetzes (N2) angeschaltet wird.

11. Verfahren nach Anspruch 10, **dadurch** gekenn-zeichnet, daß mit der Speicherung der sekundären Wegeleitinformationen in dem zweiten Fernmeldenetz (N2) bezüglich der genannten Teilnehmerstelle (TLN) weitere Angaben festgehalten werden, die im Zuge von zu der Ortsvermittlungsstelle (OV2) des zweiten Fernmeldenetzes (N2) hin gelangenden Verbindungswünschen bezüglich der betreffenden Teilnehmerstelle (TLN) in der Ortsvermittlungsstelle (OV2) des zweiten Fernmeldenetzes (N2) einen Hinweis auf einen Teilnehmer im Wechsel liefern, und daß diese weiteren Angaben im Zuge eines Verbindungsaufbaus zu der betreffenden Teilnehmerstelle (TLN) hin derart ausgewertet werden, daß in dem Fall, daß die betreffende Teilnehmerstelle (TLN) an der zugehörigen Ortsvermittlungsstelle (OV2) schon angeschlossen ist, der Verbindungsaufbau zu der betreffenden Teilnehmerstelle (TLN) über diese Ortsvermittlungsstelle (OV2) erfolgt, während bei noch nicht an der betreffenden Ortsvermittlungsstelle (OV2) angeschlossener Teilnehmerstelle (TLN) die zugehörige sekundäre Wegeleitinformation zur Anwendung gelangt.

12. Verfahren nach Anspruch 11, **dadurch** gekenn-zeichnet, daß zur Deaktivierung der sekundären Wegeleitinformation bezüglich der betreffenden Teilnehmerstelle (TLN) in dem zweiten Fernmeldenetz (N2) ein beim Anschalten der betreffenden Teilnehmerstelle (TLN) hervorgerufenes Fehlerendesignal auf der zugehörigen Teilnehmerstellenanschlußleitung herangezogen wird.

13. Verfahren nach einem der Ansprüche 10 bis 12, da-durch **gekennzeichnet** , daß nach dem Abschalten der betreffenden Teilnehmerstelle (TLN) von der Ortsvermittlungsstelle (OV1) des ersten Fernmeldenetzes (N1) die primäre Wegeleitinformation in dem ersten Fernmeldenetz (N1) derart geändert wird, daß von dem ersten Fernmeldenetz (N1) ausgehende Verbindungswünsche zu der betreffenden Teilnehmerstelle (TLN) hin von dem ersten Fernmeldenetz (N1) über die genannte Verbindungsstelle (GW) zu dem zweiten Fernmeldenetz (N2) hin geleitet werden.

14. Verfahren nach einem der Ansprüche 10 bis 13, da-durch **gekennzeichnet** , daß die sekundären Wegeleitinformationen bezüglich der betreffenden Teilnehmerstelle (TLN) in dem zweiten Fernmeldenetz (N2) gelöscht werden.

15. Verfahren nach Anspruch 13 oder 14, **dadurch gekennzeichnet , daß** in dem zweiten Fernmeldenetz (N2) die dort zusammen mit der sekundären Wegeleitinformation zuvor gespeicherte Angabe, gemäß der sich die betreffende Teilnehmerstelle (TLN) im Wechsel befindet, in den Anschluß der betreffenden Teilnehmerstelle (TLN) an dieser Ortsvermittlungsstelle (OV2) angebende Angaben geändert wird.

16. Verfahren nach Anspruch 12, **dadurch** gekenn-zeichnet, daß beim Anschalten der Teilnehmerstelle (TLN) in dem Fall, daß es sich um eine analoge Teilnehmerstelle handelt, ein Leitungsfehlerende an der Ortsvermittlungsstelle (OV2) des zweiten Fernmeldenetzes N2 durch die Aufhebung eines dort bestehenden Erd- oder Kurzschlusses der zugehörigen Teilnehmerleitung erreicht wird.

17. Verfahren nach Anspruch 12, **dadurch** gekenn-zeichnet, daß zur Leitungsfehlerendeerkennung einer digitalen Teilnehmeranschlußleitung ein Trägersignal für die Dauer der Teilnehmerstellenumschaltung permanent wirksam gemacht und seitens der Ortsvermittlungsstelle (OV2) des zweiten Fernmeldenetzes (N2) überwacht wird.

18. Verfahren nach einem der Ansprüche 1 bis 9,
**gekennzeichnet durch** die zusätzliche Anwendung des Verfahrens nach einem der Ansprüche 10 bis 17.

19. Verfahren nach einem der Ansprüche 1 bis 18,
**dadurch gekennzeichnet , daß** die primären und sekundären Wegeleitinformationen im jeweiligen Fernmeldenetz (N1, N2) entweder lokal auf Vermittlungsstellenebene oder netzzentral gespeichert und zur Verfügung gestellt werden.

20. Verfahren nach einem der Ansprüche 1 bis 19,
**dadurch gekennzeichnet , daß** eine im Zuge des Aufbaus ein und derselben Verbindung mehrfach über die Verbindungsstelle (GW) zwischen den beiden Fernmeldenetzen (N1, N2) erfolgende Verbindungsführung durch eine Zählung des Verbindungsdurchgangs in jeweils beteiligten Transitknoten erfaßt und der Abbau der betreffenden Verbindung bei Überschreiten einer festgelegten Anzahl solcher Verbindungsdurchgänge bewirkt wird.

21. Verfahren nach einem der Ansprüche 1 bis 19,
**dadurch gekennzeichnet , daß** eine im Zuge des Aufbaus ein und derselben Verbindung mehrfach über die Verbindungsstelle (GW) zwischen den beiden Fernmeldenetzen (N1, N2) erfolgende Verbindungsführung durch besondere Maßnahmen in den beteiligten Ortsvermittlungsstellen (OV1, OV2) vermieden wird..

22. Verfahren nach einem der Ansprüche 1 bis 21,
**dadurch gekennzeichnet , daß** die Teilnehmerstelle (TLN) über eine Zugriffsnetzwerk-Schnittstelle an mindestens eine der Ortsvermittlungsstellen (OV1, OV2) angeschlossen ist bzw. anzuschließen ist und daß als Kriterium für eine Aktivierung bzw. Deaktivierung des Verbindungsaufbaus zu der betreffenden Teilnehmerstelle (TLN) hin entsprechend der jeweiligen sekundären Wegeleitinformationen die an die jeweilige Ortsvermittlungsstelle seitens des Zugriffsnetzwerks signalisierte Verfügbarkeit/Nichtverfügbarkeit der Teilnehmerstelle (TLN) herangezogen wird.

## Claims

1. Method for switching a subscriber station which is connected to a first telecommunications network from the first telecommunications network to a second telecommunications network which is connected to the first telecommunications network via at least one connection point,
with primary routing information relating to the relevant subscriber station being contained in both telecommunications networks, by means of which primary routing information the process of setting up a connection from the respective telecommunications network to the local exchange to which the relevant subscriber station is connected in the first telecommunications network is defined,
**characterized**
**in that** secondary routing information is initially stored in the first telecommunications network (N1), which secondary routing information is used for setting up a connection for the relevant subscriber station (TLN), when the latter is not present, via said connection point (GW) to the second telecommunications network (N2),
and **in that**, finally, the relevant subscriber station (TLN) is disconnected from the local exchange (OV1) of the first telecommunications network (N1) and is connected to the local exchange (OV2) of the second telecommunications network (N2).

2. Method according to Claim 1, **characterized in that** the primary routing information in the second telecommunications network (N2) relating to the relevant subscriber station (TLN) is changed in such a manner that connections in the second telecommunications network (N2) to the relevant subscriber station (TLN) are set up to the local exchange (OV2) of this second telecommunications network (N2).

3. Method according to Claim 1 or 2, **characterized in that**, with the storage of the secondary routing information in the first telecommunications network (N1) relating to the said subscriber station (TLN), further details are defined which, in the course of connection requests which are passed to the local exchange (OV1) of the first telecommunications network (N1) relating to the relevant subscriber station (TLN) in the local exchange (OV1) of the first telecommunications network (N1), provide information to a subscriber station which is involved in the change, and **in that** these further details are evaluated in the course of setting up a connection to the relevant subscriber station (TLN) in such a manner that, in the situation where the relevant subscriber station (TLN) is still connected to the local exchange (OV1) of the first telecommunications network (N1), the process of setting up a connection to the relevant subscriber station (TLN) is carried out via this local exchange (OV1) while, if the subscriber station (TLN) is no longer connected to the relevant local exchange (OV1), the associated secondary routing information is used.

4. Method according to Claim 3, **characterized in that** any fault which is caused on the subscriber station access line during disconnection of the relevant subscriber station (TLN) is used to activate the secondary routing information relating to the relevant subscriber station (TLN) in the local exchange (OV1) of the first telecommunications network (N1).

5. Method according to one of Claims 1 to 4, **characterized**
**in that**, after the disconnection of the relevant subscriber station (TLN) from the local exchange (OV1) of the first telecommunications network (N1), the primary routing information in the first telecommunications network (N1) is changed in such a manner that connection requests originating from the first telecommunications network (N1) to the relevant subscriber station (TLN) are passed from the first telecommunications network (N1) via the said connection point (GW) to the second telecommunications network (N2).

6. Method according to Claim 5, **characterized in that** the secondary routing information relating to the relevant subscriber station (TLN) in the first telecommunications network (N1) is then deleted.

7. Method according to Claim 5 or 6, **characterized in that** details relating to the relevant subscriber station (TLN) which was previously connected there are deleted in the first telecommunications network (N1).

8. Method according to Claim 4, **characterized in that**, in the situation where the subscriber station (TLN) is an analogue subscriber station, a line fault in the local exchange (OV1) of the first telecommunications network (N1) during disconnection of the subscriber station (TLN) is caused by an earth fault or short circuit of the associated subscriber line.

9. Method according to Claim 4, **characterized in that** a carrier signal is made permanently effective for the duration of the subscriber switching and is monitored by the local exchange (OV1) of the first telecommunications network (N1) in order to identify a line fault on a digital subscriber access line.

10. Method for switching a subscriber station which is connected to a first telecommunications network from the first telecommunications network to a second telecommunications network which is connected to the first telecommunications network via at least one connection point,
with primary routing information relating to the relevant subscriber station being contained in both telecommunications networks, by means of which primary routing information the process of setting up a connection from the respective telecommunications network to the local exchange to which the relevant subscriber station is connected in the first telecommunications network is defined,
**characterized**
**in that** secondary routing information is initially stored in the second telecommunications network (N2), which secondary routing information is used for setting of a connection for the relevant subscriber station (TLN), when the latter is not present, via the said connection point (GW) to the first telecommunications network (N1),
**in that** the primary routing information in the second telecommunications network (N2) relating to the relevant subscriber station (TLN) is then changed in such a manner that connections in the second telecommunications network (N2) to the relevant subscriber station (TLN) are set up to the local exchange (OV2) of this second telecommunications network (N2), and in that, finally, the relevant subscriber station (TLN) is disconnected from the local exchange (OV1) of the first telecommunications network (N1) and is connected to the local exchange (OV2) of the second telecommunications network (N2).

11. Method according to Claim 10, **characterized in that**, with the storage of the secondary routing information in the second telecommunications network (N2) relating to the said subscriber station (TLN), further details are defined which, in the course of connection requests which are passed to the local exchange (OV2) of the second telecommunications network (N2) relating to the relevant subscriber station (TLN) in the local exchange (OV2) of the second telecommunications network (N2), provide information to a subscriber involved in the change, and
**in that** these further details are evaluated in the course of setting up a connection to the relevant subscriber station (TLN) in such a manner that, in the situation where the relevant subscriber station (TLN) is already connected to the associated local exchange (OV2), the process of setting up a connection to the relevant subscriber station (TLN) is carried out via this local exchange (OV2) while, if the subscriber station (TLN) is not yet connected to the relevant local exchange (OV2), the associated secondary routing information is used.

12. Method according to Claim 11, **characterized in that** a fault end signal which is caused during connection of the relevant subscriber station (TLN) to the associated subscriber station access line is used to deactivate the secondary routing information relating to the relevant subscriber station (TLN) in the second telecommunications network (N2).

13. Method according to one of Claims 10 to 12,
**characterized in that**, after disconnection of the relevant subscriber station (TLN) from the local exchange (OV1) of the first telecommunications network (N1), the primary routing information in the first telecommunications network (N1) is changed in such a manner that connection requests originating from the first telecommunications network (N1) to the relevant subscriber station (TLN) are passed from the first telecommunications network (N1) via the said connection point (GW) to the second telecommunications network (N2).

14. Method according to one of Claims 10 to 13,
**characterized in that** the secondary routing information relating to the relevant subscriber station (TLN) in the second telecommunications network (N2) is deleted.

15. Method according to Claim 13 or 14, **characterized in that**, in the second telecommunications network (N2), the details which were previously stored there together with the secondary routing information and on the basis of which the relevant subscriber station (TLN) is involved in the change, is changed in details which indicate the connection of the relevant subscriber station (TLN) to this local exchange (OV2).

16. Method according to Claim 12, **characterized in that**, on connection of the subscriber station (TLN) and in the situation where is an analogue subscriber station, a line fault end is achieved at the local exchange (OV2) of the second telecommunications network (N2) by rectification of an earth fault or short circuit existing there on the associated subscriber line.

17. Method according to Claim 12, **characterized in that** a carrier signal is made permanently effective for the duration of the subscriber station switching and is monitored by the local exchange (OV2) of the second telecommunications network (N2) in order to identify a line fault on a digital subscriber access line.

18. Method according to one of Claims 1 to 9, **characterized by** the additional use of the method according to one of Claims 10 to 17.

19. Method according to one of Claims 1 to 18,
**characterized in that** the primary and secondary routing information in the respective telecommunications network (N1, N2) is stored and made available either locally at the exchange level or centrally in the network.

20. Method according to one of Claims 1 to 19,
**characterized in that** connection control which is carried out a number of times via the connection point (GW) between the two telecommunications networks (N1, N2) in the course of setting up one and the same connection is detected by counting the passing of the connection in the respectively involved transient nodes, and the relevant connection is cleared if a defined number of such connection passes is exceeded.

21. Method according to one of Claims 1 to 19,
**characterized in that** connection control which is carried out a number of times via the connection point (GW) between the two telecommunications networks (N1, N2) in the course of setting up one and the same connection is avoided by special measures in the local exchanges (OV1, OV2) which are involved.

22. Method according to one of Claims 1 to 21,
**characterized in that** the subscriber station (TLN) is connected or can be connected to at least one of the local exchanges (OV1, OV2) via an access network interface, and **in that** the availability/non-availability of the subscriber station (TLN), which is signalled by the access network to the respective local exchange, is used as a criterion for activation or deactivation of the process of setting up a connection to the relevant subscriber station (TLN) in accordance with the respective secondary routing information.

## Revendications

1. Procédé pour commuter un poste d'abonné raccordé à un premier réseau de télécommunications du premier réseau de télécommunications sur un deuxième réseau de télécommunications qui est relié au premier réseau de télécommunications par l'intermédiaire d'au moins un point de passerelle,
des informations de routage primaires, routing information, étant contenues dans les deux réseaux de télécommunications, concernant le poste d'abonné concerné, par lesquelles l'établissement de la connexion est déterminé, du réseau de télécommunications respectif vers le commutateur local auquel est raccordé le poste d'abonné concerné dans le premier réseau de télécommunications,
**caractérisé en ce que**
tout d'abord, dans le premier réseau de télécommunications (N1), une information de routage secondaire est mise en mémoire, à laquelle il est fait appel, concernant le poste d'abonné (TLN) concerné en l'absence de celui-ci, pour un établissement de connexion vers le deuxième réseau de télécommunications (N2) via ledit point de passerelle (GW) et
finalement, le poste d'abonné (TLN) concerné est déconnecté du commutateur local (OV1) du premier réseau de télécommunications (N1) et est raccordé au commutateur local (OV2) du deuxième réseau de télécommunications (N2).

2. Procédé selon la revendication 1, **caractérisé en ce que** l'information de routage primaire, dans le deuxième réseau de télécommunications (N2), concernant le poste d'abonné (TLN) concerné, subit une modification telle que des connexions dans le deuxième réseau de télécommunications (N2) vers le poste d'abonné (TLN) concerné sont établies vers le commutateur local (OV2) de ce deuxième réseau de télécommunications (N2).

3. Procédé selon la revendication 1 ou 2, **caractérisé en ce qu'**avec la mise en mémoire de l'information de routage secondaire dans le premier réseau de télécommunications (N1), concernant ledit poste d'abonné (TLN), sans retenue des indications supplémentaires qui, dans le cadre de demandes de connexions concernant le poste d'abonné (TLN) concerné, lesquelles parviennent au commutateur local (OV1) du premier réseau de télécommunications (N1), fournissent, dans le commutateur local (OV1) du premier réseau de télécommunications (N1), un renseignement sur un poste d'abonné en cours de changement, et **en ce que** ces indications supplémentaires sont évaluées, dans le cadre d'un établissement de connexion vers le poste d'abonné (TLN) concerné, de manière telle que, dans le cas où le poste d'abonné (TLN) concerné est encore raccordé au commutateur local (OV1) du premier réseau de télécommunications (N1), l'établissement de connexion vers le poste d'abonné (TLN) concerné se fait via ce commutateur local (OV1) tandis que, dans le cas d'un poste d'abonné (TLN) qui n'est plus raccordé au commutateur local (OV1) concerné, l'information de routage secondaire associée trouve à s'appliquer.

4. Procédé selon la revendication 3, **caractérisé en ce que**, pour activer l'information de routage secondaire concernant le poste d'abonné (TLN) concerné, il est fait appel, dans le commutateur local (OV1) du premier réseau de télécommunications (N1), à une erreur provoquée sur la ligne de raccordement du poste d'abonné lors de la déconnexion du poste d'abonné (TLN) concerné.

5. Procédé selon l'une des revendications 1 à 4, **caractérisé en ce que**, après que le poste d'abonné (TLN) concerné a été déconnecté du commutateur local (OV1) du premier réseau de télécommunications (N1), l'information de routage primaire, dans le premier réseau de télécommunications (N1), subit une modification telle que des demandes de connexions au poste d'abonné (TLN) concerné, partant du premier réseau de télécommunications (N1), sont acheminées du premier réseau de télécommunications (N1) vers le deuxième réseau de télécommunications (N2) en passant par ledit point de passerelle (GW).

6. Procédé selon la revendication 5, **caractérisé en ce que** sont ensuite effacées les informations de routage secondaires concernant le poste d'abonné (TLN) concerné dans le premier réseau de télécommunications (N1).

7. Procédé selon la revendication 5 ou 6, **caractérisé en ce que** sont effacées, dans le premier réseau de télécommunications (N1), des indications concernant le poste d'abonné (TLN) concerné qui y était raccordé jusqu'alors.

8. Procédé selon la revendication 4, **caractérisé en ce que**, lors de la déconnexion du poste d'abonné (TLN) dans le cas où il s'agit d'un poste d'abonné analogique, une erreur de ligne est provoquée dans le commutateur local (OV1) du premier réseau de télécommunications (N1) par court-circuit ou mise à la terre de la ligne d'abonné associée.

9. Procédé selon la revendication 4, **caractérisé en ce que**, aux fins de la reconnaissance d'une erreur de ligne sur une ligne de raccordement d'abonné numérique, un signal porteur est rendu actif en permanence pour la durée de la commutation d'abonné et est surveillé côté commutateur local (OV1) du premier réseau de télécommunications (N1).

10. Procédé pour commuter un poste d'abonné raccordé à un premier réseau de télécommunications du premier réseau de télécommunications sur un deuxième réseau de télécommunications qui est relié au premier réseau de télécommunications par l'intermédiaire d'au moins un point de passerelle,
des informations de routage primaires, routing information, étant contenues dans les deux réseaux de télécommunications, concernant le poste d'abonné concerné, par lesquelles l'établissement de la connexion est déterminé, du réseau de télécommunications respectif vers le commutateur local auquel est raccordé le poste d'abonné concerné dans le premier réseau de télécommunications,
**caractérisé en ce que**
tout d'abord, dans le deuxième réseau de télécommunications (N2), une information de routage secondaire est mise en mémoire, à laquelle il est fait appel, concernant le poste d'abonné (TLN) concerné en l'absence de celui-ci, pour un établissement de connexion vers le premier réseau de télécommunications (N1) via ledit point de passerelle (GW) et
ensuite, l'information de routage primaire, dans le deuxième réseau de télécommunications (N2), concernant le poste d'abonné (TLN) concerné, subit une modification telle que des connexions dans le deuxième réseau de télécommunications (N2) vers le poste d'abonné (TLN) concerné sont établies vers le commutateur local (OV2) de ce deuxième réseau de télécommunications (N2) et
finalement, le poste d'abonné (TLN) concerné est déconnecté du commutateur local (OV1) du premier réseau de télécommunications (N1) et est raccordé au commutateur local (OV2) du deuxième réseau de télécommunications (N2).

11. Procédé selon la revendication 10, **caractérisé en ce qu'**avec la mise en mémoire de l'information de routage secondaire dans le deuxième réseau de télécommunications (N2), concernant ledit poste d'abonné (TLN), sans retenue des indications supplémentaires qui, dans le cadre de demandes de connexions concernant le poste d'abonné (TLN) concerné, lesquelles parviennent au commutateur local (OV2) du deuxième réseau de télécommunications (N2), fournissent, dans le commutateur local (OV2) du deuxième réseau de télécommunications (N2), un renseignement sur un abonné en cours de changement, et **en ce que** ces indications supplémentaires sont évaluées, dans le cadre d'un établissement de connexion vers le poste d'abonné (TLN) concerné, de manière telle que, dans le cas où le poste d'abonné (TLN) concerné est déjà raccordé au commutateur local (OV2) associé, l'établissement de connexion vers le poste d'abonné (TLN) concerné se fait via ce commutateur local (OV2) tandis que, dans le cas d'un poste d'abonné (TLN) qui n'est pas encore raccordé au commutateur local (OV2) concerné, l'information de routage secondaire associée trouve à s'appliquer.

12. Procédé selon la revendication 11, **caractérisé en ce que**, pour désactiver l'information de routage secondaire concernant le poste d'abonné (TLN) concerné, il est fait appel, dans le deuxième réseau de télécommunications (N2), à un signal de fin d'erreur provoqué sur la ligne de raccordement du poste d'abonné associée lors du raccordement du poste d'abonné (TLN) concerné.

13. Procédé selon l'une des revendications 10 à 12,
**caractérisé en ce que**, après que le poste d'abonné (TLN) concerné a été déconnecté du commutateur local (OV1) du premier réseau de télécommunications (N1), l'information de routage primaire, dans le premier réseau de télécommunications (N1), subit une modification telle que des demandes de connexions au poste d'abonné (TLN) concerné, partant du premier réseau de télécommunications (N1), sont acheminées du premier réseau de télécommunications (N1) vers le deuxième réseau de télécommunications (N2) en passant par ledit point de passerelle (GW).

14. Procédé selon l'une des revendications 10 à 13,
**caractérisé en ce que** les informations de routage secondaires concernant le poste d'abonné (TLN) concerné sont effacées dans le deuxième réseau de télécommunications (N2).

15. Procédé selon la revendication 13 ou 14, **caractérisé en ce que**, dans le deuxième réseau de télécommunications (N2), l'indication qui y a été préalablement mise en mémoire avec l'information de routage secondaire et selon laquelle le poste d'abonné (TLN) concerné est en cours de changement, subit une modification pour devenir des indications indiquant le raccordement du poste d'abonné (TLN) concerné à ce commutateur local (OV2).

16. Procédé selon la revendication 12, **caractérisé en ce que**, lors du raccordement du poste d'abonné (TLN), dans le cas où il s'agit d'un poste d'abonné analogique, une fin d'erreur de ligne est obtenue, au niveau du commutateur local (OV2) du deuxième réseau de télécommunications (N2), par la suppression d'un court-circuit ou d'une mise à la terre, y existant, de la ligne d'abonné associée.

17. Procédé selon la revendication 12, **caractérisé en ce que**, aux fins de la reconnaissance d'une fin d'erreur de ligne d'une ligne de raccordement d'abonné numérique, un signal porteur est rendu actif en permanence pour la durée de la commutation du poste d'abonné et est surveillé côté commutateur local (OV2) du deuxième réseau de télécommunications (N2).

18. Procédé selon l'une des revendications 1 à 9, **caractérisé par** l'application supplémentaire du procédé selon l'une des revendications 10 à 17.

19. Procédé selon l'une des revendications 1 à 18, **caractérisé en ce que** les informations de routage primaires et secondaires, dans le réseau de télécommunications (N1, N2) respectif, sont mises en mémoire et à disposition soit localement au niveau du centre de commutation soit centralement dans le réseau.

20. Procédé selon l'une des revendications 1 à 19, **caractérisé en ce qu'**un routage de connexion passant plusieurs fois par le point de passerelle (GW) entre les deux réseaux de télécommunications (N1, N2) dans le cadre de l'établissement d'une seule et même connexion est détecté par un comptage du passage de la connexion dans des noeuds de transit respectivement impliqués et la fermeture de la connexion concernée est provoquée en cas de dépassement d'un nombre déterminé de tels passages de la connexion.

21. Procédé selon l'une des revendications 1 à 19, **caractérisé en ce qu'**un routage de connexion passant plusieurs fois par le point de passerelle (GW) entre les deux réseaux de télécommunications (N1, N2) dans le cadre de l'établissement d'une seule et même connexion est évité par des mesures particulières dans les commutateurs locaux (OV1, OV2) impliqués.

22. Procédé selon l'une des revendications 1 à 21, **caractérisé en ce que** le poste d'abonné (TLN) est raccordé ou doit être raccordé via une interface de réseau d'accès à au moins l'un des commutateurs locaux (OV1, OV2) et **en ce qu'**il est fait appel à la disponibilité / non-disponibilité du poste d'abonné (TLN) signalée au commutateur local respectif côté réseau d'accès en tant que critère pour une activation resp. désactivation de l'établissement d'une connexion vers le poste d'abonné (TLN) concerné selon les informations de routage secondaires respectives.
